# EUROPEAN PATENT SPECIFICATION

(11) **EP 2 865 891 B1**
(45) Date of publication and mention of the grant of the patent: **27.07.2016**
(21) Application number: 14188976.6
(22) Date of filing: 15.10.2014
(51) Int. Cl.: F03D 80/00

(54) **Equipment lifting apparatus for wind turbine and installation method of the same**
Ausstattungshebevorrichtung für Windkraftanlagen und Installationsverfahren der Ausstattungshebevorrichtung
Dispositif de levage d'équipement pour une éolienne et un procédé d'installation de l'éolienne

(30) Priority: 17.10.2013 JP 2013216089
(43) Date of publication of application: 29.04.2015
(73) Proprietor: MITSUBISHI HEAVY INDUSTRIES, LTD., Tokyo 108-8215 (JP)
(72) Inventor: Numajiri, Tomohiro, TOKYO, 108-8215 (JP); Fujioka, Yoshihiro, YOKOHAMA-SHI, KANAGAWA, 231-8715 (JP)
(74) Representative: Intès, Didier Gérard André

(56) References cited:
- EP-A1- 2 520 533
- EP-A1- 2 520 792
- EP-A1- 2 784 018
- EP-A2- 1 101 934
- EP-A2- 1 677 007
- WO-A1-2013/080392

## Description

### TECHNICAL FIELD

The present disclosure relates to a device lifting apparatus for a wind turbine and an installation method of the same.

### BACKGROUND

In recent years, a wind turbine using wind force has become widely used in consideration of preservation of the global environment. A wind turbine as a power generating facility commonly includes a rotor having a hub to which a plurality of blades are attached, and a main shaft which rotates with the rotor. The rotor rotates by receiving wind at the blades, and the rotation energy is inputted into a generator via the main shaft, thereby generating electric power.

The rotor and the main shaft are normally supported on a nacelle to be freely rotatable. The nacelle is disposed on an upper end of a tower installed standing upright on the ground or on the ocean. A variety of devices are disposed in the interior space of the nacelle. When transferring the devices disposed in the nacelle interior space or tools used for maintenance of such devices during construction, maintenance, dismantlement or the like of a wind turbine, a lifting apparatus such as a crane or a winch is commonly used to lift or lower the devices or the tools between the lower part of the tower and the nacelle interior space disposed at a high level. For example, Patent Documents 1 to 3 disclose techniques of lifting and lowering devices using a lifting apparatus attached to a nacelle.

Meanwhile, a wind turbine has increased in size for the purpose of improving power generation efficiency, and the load applied to the tower tends to increase further. Thus, it is desirable to reduce the size and weight of a nacelle disposed on the upper end of the tower. On the other hand, due to the increase in size of a wind turbine, it is difficult to prevent weight-increase of the devices (a generator and a drive train, for instance) disposed in the interior space of the nacelle. Normally, a lifting apparatus (a winch or a crane, for instance) installed permanently is often disposed in the interior space of the nacelle, for transferring the devices in the nacelle interior space. However, in a case where a large lifting apparatus having large rated load for transferring devices of heavy weight is disposed in the nacelle interior space, it becomes difficult to reduce the weight of the nacelle. Thus, Patent Document 1 discloses a configuration in which a reel is disposed in the interior space of the tower, which may enable weight reduction of the nacelle.

### Citation List

### Patent Literature

Patent Document 1: EP1101934A
Patent Document 2: EP1677007A

### SUMMARY

When the size and weight of a nacelle are intended to be reduced, however, it is difficult to secure room in the limited nacelle interior space constantly for installing a lifting apparatus capable of even transferring a large device.

In this regard, although Patent Documents 1 and 2 disclose a configuration in which a ceiling of the nacelle is opened to secure room and then a crane is installed therein, opening the ceiling of the nacelle for installing a crane requires more extensive work with the increase in size of a wind turbine. Also, it may be necessary to halt the work in the event of bad weather.

With regard to the above issue, an object of at least some embodiments of the present invention is to provide a device lifting apparatus for a wind turbine and an installation method of the same which are capable of transferring a large device while reducing the size and weight of a nacelle.

A device lifting apparatus for a wind turbine according to at least one embodiment of the present invention is for lifting and lowering a device disposed in a nacelle mounted on an upper end of a tower of the wind turbine. The device lifting apparatus includes: a wire for suspending the device; a pulley part including at least one pulley for guiding the wire; an arm part for supporting the pulley part, the arm part being disposed in a nacelle interior space to be freely attachable and detachable; and a first reel for winding the wire up or down, the first reel being disposed in a tower interior space. The arm part is dividable into a plurality of sections so that each section is capable of passing through a first opening which brings the nacelle interior space into communication with the tower interior space. The wire extends between the arm part in the nacelle interior space and the first reel in the tower interior space via the first opening.

According to the above device lifting apparatus for a wind turbine, the arm part is configured to be freely attachable and detachable with respect to the nacelle, which makes it possible to install the device lifting apparatus for a wind turbine in the nacelle interior space when needed upon construction, maintenance, dismantlement, or the like of a wind turbine. Thus, the device lifting apparatus may be removed while the wind turbine is operated, which enables effective use of the nacelle interior space. Further, the above device lifting apparatus for a wind turbine includes a first reel for lifting and lowering devices, the first reel being disposed in the tower interior space in order to reduce the weight of the nacelle. A wire extends between the arm part in the nacelle interior space and the first reel in the tower interior space via the first opening through which the nacelle interior space communicates with the tower interior space. Moreover, the arm part is dividable into a plurality of sections so that each section is capable of passing through the first opening. As a result, even a long arm part can be transferred through the first opening by being divided into a plurality of sections. Thus, it is possible to transfer each component of the device lifting apparatus for a wind turbine between the nacelle interior space and the tower interior space without passing through the outside of a wind turbine, which makes it possible to install or remove the device lifting apparatus for a wind turbine even in bad weather.

In some embodiments, the first opening is an opening disposed on at least one of lateral sides of a main shaft of the wind turbine.

As a result, it is possible to prevent interference between each component and the main shaft when transferring the components of the device lifting apparatus for a wind turbine via the first opening. Also, the main shaft is commonly a rotary member and thus often disposed away from its surroundings. Thus, utilizing the space between the main shaft and the surroundings makes it possible to smoothly transfer each component of the device lifting apparatus for a wind turbine between the tower interior space and the nacelle interior space via the first opening.

In some embodiments, the pulley part or the plurality of sections of the arm part are configured capable of being transferred from the tower interior space to the nacelle interior space via the first opening by means of a lifting apparatus being disposed in the nacelle interior space and having smaller rated load than that of the device lifting apparatus.

As described above, each component (the pulley part, the bracket part, or the plurality of sections of the arm part) of the device lifting apparatus for a wind turbine is transferred between the nacelle interior space and the tower interior space by means of a lifting apparatus having smaller rated load than that of the device lifting apparatus, which makes it possible to suppress increase in weight and size of the nacelle.

In some embodiments, the device lifting apparatus for a wind turbine further includes at least two brackets for supporting the arm part on the nacelle. The at least two brackets are attached directly or indirectly to a nacelle baseplate mounted on the upper end of the tower.

As a result, the arm part is supported by the at least two brackets, which makes it possible to stably fix the device lifting apparatus for a wind turbine in the nacelle interior space. Further, a nacelle baseplate is commonly formed to have high structural strength. Thus, attaching the two brackets to the nacelle baseplate makes it possible to even transfer a device having heavy weight stably.

In one embodiment, the at least two brackets are attached to the nacelle baseplate or a nacelle frame connected to the nacelle baseplate, or to a housing of a main bearing rotatably supporting the main shaft of the wind turbine.

As a result, it is possible to stably fix the device lifting apparatus for a wind turbine in the nacelle interior space, and to even transfer a device having heavy weight stably by the device lifting apparatus for a wind turbine.

In some embodiments, the nacelle interior space includes a first region and a second region positioned on the lateral sides of the main shaft of the wind turbine, respectively. The first opening is positioned on one of the lateral sides of the main shaft in the first region of the nacelle interior space. Also, the arm part is supported on the housing of the main bearing supporting the main shaft, the arm part extending from the housing toward an installation position for the device in the second region. The wire extends along the arm part from the first opening in the first region toward the installation position of the device so as to pass over the housing and the main shaft.

As a result, it is possible to install the device lifting apparatus for a wind turbine on the housing of the main shaft, the housing having high structural strength. Also, it is possible to extend the wire linearly from the first opening toward the installation position of the device. Thus, it is possible to suppress occurrence of loosening of the wire and uneven distribution of the load.

In one embodiment, the arm part and the pulley part are configured capable of being arranged in at least two symmetric layouts with respect to a plane passing through a center axis of the main shaft so that it is possible to transfer the device both when the device is in the first region and when the device is in the second region.

As a result, it is possible to use the single device lifting apparatus for a wind turbine to transfer the device disposed on either one of the opposite lateral sides of the main shaft across the plane passing through the center axis of the main shaft.

In some embodiments, a distal end of the arm part is positioned over a second opening to transfer the device between the nacelle interior space and a nacelle exterior space by the device lifting apparatus, the second opening being formed on a bottom face of the nacelle.

As a result, it is possible to suspend and lift of lower the device smoothly between the nacelle interior space and the nacelle exterior space via the second opening.

In some embodiments, the pulley part includes: a first pulley disposed over the first opening and configured to pull the wire into the nacelle interior space from the first reel, a second pulley disposed over the installation position for the device and provided as a suspending point at which the device is suspended on the wire, and a third pulley disposed between the first pulley and the second pulley.

As described above, the first pulley is disposed over the first opening, for pulling the wire from the first reel into the nacelle interior space, while the second pulley is disposed over the installation position for the device, the second pulley serving as the suspending point at which the device is suspended on the wire. Thus, it is possible to prevent the wire from contacting the nacelle bottom face (surrounding rim of the first opening) or other devices. Also, arranging the third pulley between the first pulley and the second pulley makes it possible to guide the wire smoothly between the first pulley and the second pulley.

In some embodiments, the pulley part includes a fixed pulley supported about an axis on the arm part and a movable pulley supported by the wire. Also, the device lifting apparatus further includes a wire pulling mechanism for pulling in the wire to the pulley part disposed in the nacelle interior space. The wire pulling mechanism includes a second reel disposed in the nacelle interior space, an auxiliary wire connected to an end of the wire and configured to be wound up by the second reel, and a temporarily fixing member for fixing the movable pulley when pulling in the wire by the auxiliary wire.

For instance, using the wire pulling mechanism having the above configuration makes it possible to attach the wire to the pulley part in the following procedure. First, while the movable pulley is fixed by the temporarily fixing member, the auxiliary wire to which the wire is connected is wound up by the second reel. Next, when the end of the wire has reached the fixing section on which the end of the wire is to be fixed, the end of the wire is fixed to the fixing section and then the temporarily fixing member is removed. Accordingly, the wire is attached to the pulley part including the fixed pulley and the movable pulley.

Providing the wire pulling mechanism with the above configuration makes it possible to pull the wire up easily in a limited space from the first reel disposed in the tower interior space to the movable pulley disposed in the nacelle interior space.

In some embodiments, the wind turbine includes a supporting frame configured to support a first device when being positioned in the first space over the second opening formed on the bottom face of the nacelle. The supporting frame is configured capable of receding to a second space which is apart from the first space by moving at least in a horizontal direction from the first space. Also, the arm part is configured capable of transferring the first device between the nacelle interior space and the nacelle exterior space via the first space and the second opening while preventing interference between the supporting frame and the first device in a state where the supporting frame has receded to the second space.

The supporting frame configured to support the first device is also configured capable of receding to the second space from the first space over the second opening. The second space is positioned offset from the first space in the horizontal direction. Also, the arm part is configured to transfer the first device between the nacelle interior space and the nacelle exterior space via the first space and the second opening in a state where the supporting frame has receded to the second space from the first space. As a result, it is possible to suspend and lift or lower the first device without the first device interfering with the supporting frame.

An installation method of a device lifting apparatus for a wind turbine, according to at least one embodiment of the present invention, is an installation method of the device lifting apparatus for a wind turbine being provided for lifting and lowering a device disposed in a nacelle mounted on an upper end of a tower of the wind turbine. The device lifting apparatus includes a wire for suspending the device, an arm part for guiding the wire, and a first reel for winding the wire up or down. The installation method includes: a transferring step of transferring a plurality of sections into a nacelle interior space via a first opening which brings a tower interior space into communication with the nacelle interior space, each section obtained by dividing the arm part so that each section is smaller than the first opening; an assembling step of assembling the arm part in the nacelle interior space from the plurality of sections transferred in the transferring step; and after assembling the arm part in the assembling step, a wire-pulling step of pulling in the wire to the arm part installed in the nacelle interior space from the first reel disposed in the tower interior space via the first opening.

According to the above installation method of the device lifting apparatus for a wind turbine, it is possible to install the device lifting apparatus for a wind turbine in the nacelle interior space when needed upon construction, maintenance, dismantlement or the like of a wind turbine. Further, it is possible to transfer each component of the device lifting apparatus for a wind turbine between the nacelle interior space and the tower interior space without passing the outside of the wind turbine, which makes it possible to install or remove the device lifting apparatus for a wind turbine even in bad weather.

In some embodiments, in the transferring step, a lifting apparatus is used to transfer the pulley part or the plurality of sections of the arm part into the nacelle interior space from the tower interior space via the first opening, the lifting device being disposed in the nacelle interior space and having smaller rated load than that of the device lifting apparatus.

As described above, the lifting apparatus having smaller rated load than that of the device lifting apparatus is used for transferring each component (the pulley part or the plurality of sections of the arm part) of the device lifting apparatus for a wind turbine between the nacelle interior space and the tower interior space. Thus, it is possible to suppress increase in weight and size of the nacelle.

In some embodiments, the pulley part includes a fixed pulley supported about an axis on the arm part, and a movable pulley supported by the wire. Also, the wire pulling step includes: fixing the movable pulley by a temporarily fixing member; after fixing the movable pulley, winding up an auxiliary wire connected to an end of the wire by a second reel disposed in the nacelle interior space so that the wire is pulled up to the pulley part and fixing the end of the wire on a nacelle side; and after winding up the wire and fixing the end of the wire, removing the temporarily fixing member from the movable pulley.

As a result, it is possible to pull the wire up easily in a limited space from the first reel disposed in the tower interior space to the movable pulley disposed in the nacelle interior space.

According to some embodiments of the present invention, it is possible to install the device lifting apparatus for a wind turbine in the nacelle interior space when needed upon construction, maintenance, dismantlement, or the like of a wind turbine, which enables effective use of the nacelle interior space. Further, it is possible to transfer each component of the device lifting apparatus for a wind turbine between the nacelle interior space and the tower interior space without passing the outside of the wind turbine, which makes it possible to install or remove the device lifting apparatus for a wind turbine even in bad weather.

### BRIEF DESCRIPTION OF DRAWINGS

FIG. 1 is a schematic diagram of an overall configuration of a wind turbine according to one embodiment.
FIG. 2 is a perspective view of an exemplary configuration of a device lifting apparatus installed on a wind turbine according to one embodiment.
FIG 3 is a planar view of an exemplary configuration of a device lifting apparatus according to one embodiment.
FIG. 4 is a side view of the device lifting apparatus seen from the direction A of FIG. 3.
FIGs. 5A to 5D are diagrams illustrating an installation method of the device lifting apparatus. FIG. 5A illustrates a state where each section is being transferred into a nacelle. FIG. 5B illustrates a state where each section is being assembled. FIG. 5C illustrates a state where a wire is being pulled in. FIG. 5D illustrates a state where the device lifting apparatus has been installed.
FIG. 6 is a diagram for describing an example of a device lifting method using the device lifting apparatus.
FIG. 7A is a perspective view of an exemplary configuration (when a device is disposed thereon) of supporting frames according to one embodiment. FIG. 7B is a perspective view of an exemplary configuration (when removed) of the supporting frames according to one embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

A wind turbine and a device lifting apparatus for the same according to embodiments of the present invention will be described below, followed by description of an installation method of the device lifting apparatus for a wind turbine.

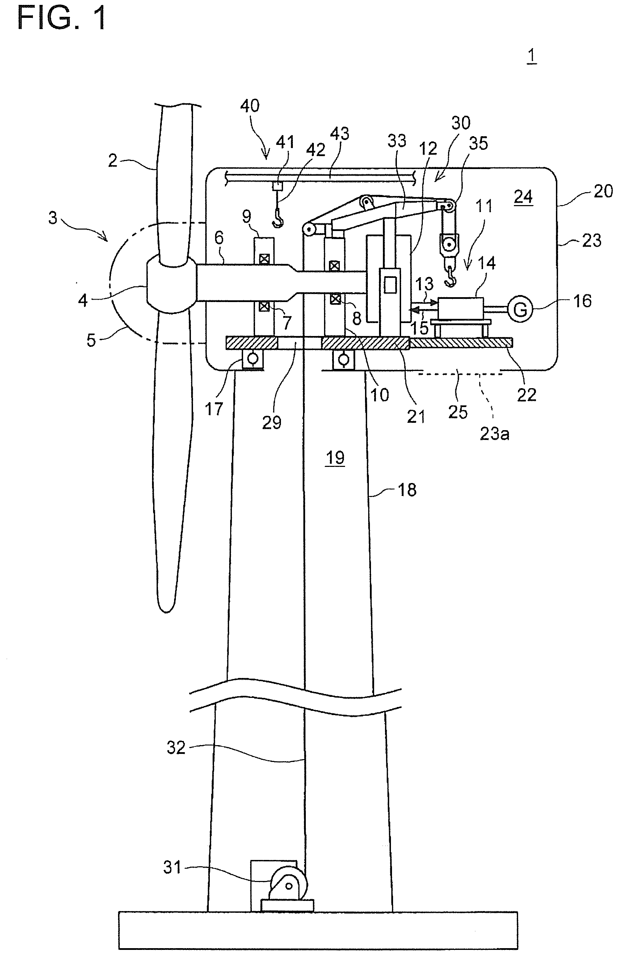

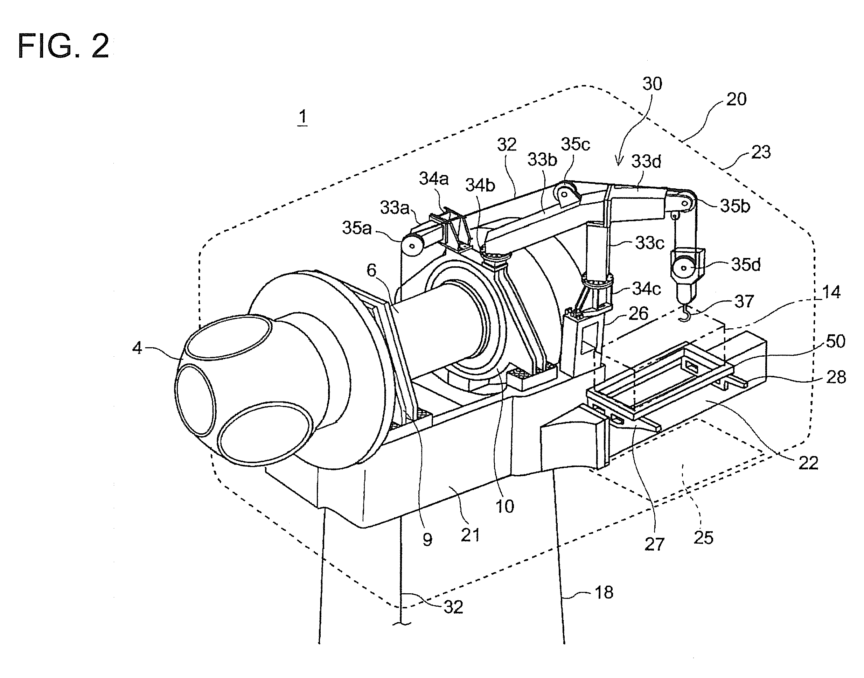

FIG. 1 is a schematic diagram of an overall configuration of a wind turbine according to one embodiment. FIG. 2 is a perspective view of an exemplary configuration of a device lifting apparatus installed on the wind turbine according to one embodiment.

As illustrated in FIGs. 1 and 2, the wind turbine 1 includes a rotor 3 having at least one blade 2 and a hub 4, a main shaft 6 coupled to the hub 4, a generator 16 which generates electric power, a drive train 11 which transmits rotation energy of the main shaft 6 to the generator 16, a nacelle 20 which accommodates a variety of devices including the main shaft 6, and a tower 18 to which the nacelle 20 is mounted.

In some embodiments, the nacelle 20 includes a nacelle baseplate 21, a nacelle frame 22 mounted to the nacelle baseplate 21, and a nacelle cover 23 disposed so as to define a nacelle interior space 24. In the present description, the space inside the nacelle cover 23, partitioned from the exterior space by the nacelle cover 23, is referred to as a nacelle interior space 24. Further, in the present embodiment, a side closer to the hub 4 in the axial direction of the main shaft 6 in the nacelle interior space 24 is referred to as a front side, while a side further from the hub 4 therein is referred to as a rear side. The nacelle frame 22 is connected to an end portion on the rear side of the nacelle baseplate 21 and disposed so as to extend along the axial direction of the main shaft 6. Two nacelle frames 22 may be provided parallel with each other across the main shaft 6. Although the present embodiment illustrates only a part of the nacelle frame 22, the other omitted part of the nacelle frame may be also disposed so as to support the nacelle cover 23 or a plate for placing a variety of devices in the nacelle 20.

The tower 18 is disposed standing upright on a base installed on the land or on the ocean. In the present description, the interior of the outer wall of the tower 18 is referred to as a tower interior space 19. On the upper end of the tower 18, the nacelle baseplate 21 may be mounted via a yaw rotation bearing 17. The main shaft 6 may be mounted on the nacelle 20 via a pair of main bearings including a front bearing 7 and a rear bearing 8. The front bearing 7 is positioned on the side closer to the hub 4, while the rear bearing 8 is positioned on the side further from the hub 4. The housing 9 of the front bearing 7 and the housing 10 of the rear bearing 8 may be each supported by the nacelle baseplate 21.

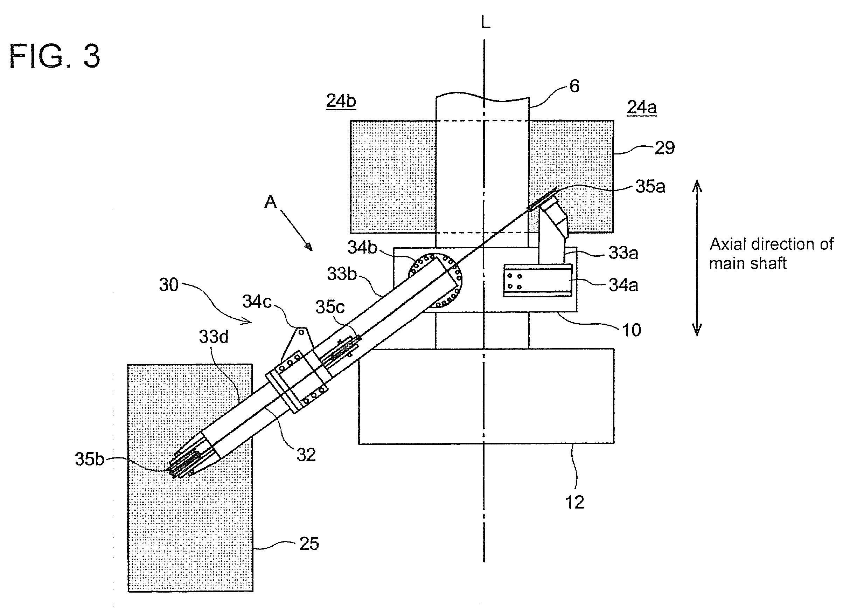

Further, the nacelle baseplate 21 includes a first opening 29 on the inner side of the yaw rotation bearing 17 so as to bring the nacelle interior space 24 into communication with the tower interior space 19. There may be at least one first opening 29 disposed on the nacelle baseplate 21 at one of the lateral sides of the main shaft 6 of the wind turbine 1. In some embodiments, there are two first openings 29 disposed on both lateral sides of the main shaft 6 of the wind turbine 1, respectively. In another embodiment, there is one first opening 29 disposed extending continuously in a direction orthogonal to the axial direction of the main shaft 6 (in the axial orthogonal direction) from one lateral side to the other lateral side across the main shaft 6 of the wind turbine 1. Here, in the illustrative embodiment of FIG. 3, one first opening 29 extends in the axial orthogonal direction from one lateral side to the other lateral side across the main shaft 6.

Still further, a second opening 25 is disposed on the bottom face of the nacelle cover 23 so as to bring the nacelle interior space 24 into communication with the nacelle exterior space. The second opening 25 may be disposed under the device intended to be transferred by the device lifting apparatus 30, which will be described below. For instance, in FIG. 2, the second opening 25 is disposed under the hydraulic motor 14, which will be described below. The second opening 25 may be configured to be openable and closable by a cover 23a so that the nacelle interior space 24 can be isolated from the nacelle exterior space to be kept in a substantially airtight state.

In one embodiment, the drive train 11 includes a hydraulic pump 12 coupled to the main shaft 6 and a hydraulic motor 14 connected to the hydraulic pump 12 through a high pressure oil line 13 and a low pressure oil line 15. The hydraulic pump 12 is supported on the nacelle baseplate 21 via a torque arm (pump supporting part) 26. The torque arm 26 is configured to absorb vibration or torque of the hydraulic pump 12. Also, the hydraulic pump 12 is driven by the main shaft 6 to increase pressure of working oil, thereby producing high-pressure working oil (pressurized oil). The outlet of the hydraulic pump 12 is connected to the inlet of the hydraulic motor 14 through the high pressure oil line 13. The hydraulic motor 14 is supported on a nacelle frame 22 via supporting frames 27, 28 (see FIG. 2).

In the above drive train 11, the pressurized oil produced in the hydraulic pump 12 is supplied to the hydraulic motor 14 through the high pressure oil line 13, and this pressurized oil drives the hydraulic motor 14. The working oil having performed work at the hydraulic motor 14 again returns to the hydraulic pump 12 through the low pressure oil line 15 disposed between the outlet of the hydraulic motor 14 and the inlet of the hydraulic pump 12. Also, the output shaft of the hydraulic motor 14 is connected to the main shaft 6 of the generator 16, so that rotation of the hydraulic motor 14 is inputted to the generator 16. The hydraulic pump 12, the hydraulic motor 14, and the generator 16 are not limited in number, and may be at least one.

Further, while FIG. 1 illustrates a case where a hydraulic transmission is used, the embodiment is not limited to this, and may employ a drive train configured to transmit torque of the main shaft 6 to the generator 16 via a gearbox. Also, the main shaft 6 may be directly connected to the generator 16 without the drive train 11.

A permanent lifting apparatus 40 may be disposed in the nacelle interior space 24 for the purpose of transferring a device in the nacelle interior space 24. The permanent lifting apparatus 40 has smaller rated load than that of the device lifting apparatus 30, which will be described below. For example, the permanent lifting apparatus 40 illustrated in FIG. 1 includes a rail 43 disposed on the upper part of the nacelle interior space 24, a second reel 41 configured to be movable in a horizontal plane along the rail 43, and a wire 42 that is wound up or down by the second reel 41. A hook for suspending a device may be attached to the far end of the wire 42. The rail 43, for instance, may be formed by the nacelle frame disposed along the edge of the ceiling of the nacelle 20. Also, in the illustrative embodiment from FIG. 1, the permanent lifting apparatus 40 is illustrated as a lifting apparatus which is permanently installed. The permanent lifting apparatus 40, however, may be a lifting apparatus that is freely attachable and detachable as long as its rated load is smaller than that of the device lifting apparatus 30. Further, while the illustrative embodiment from FIG. 1 illustrates a permanent lifting apparatus 40 in which the second reel 41 travels along the rail 43, a permanent lifting apparatus 40 of another type may be provided. For instance, a permanent lifting apparatus 40 may be a crane or a winch mounted on the nacelle baseplate 21, the nacelle frame, or the like.

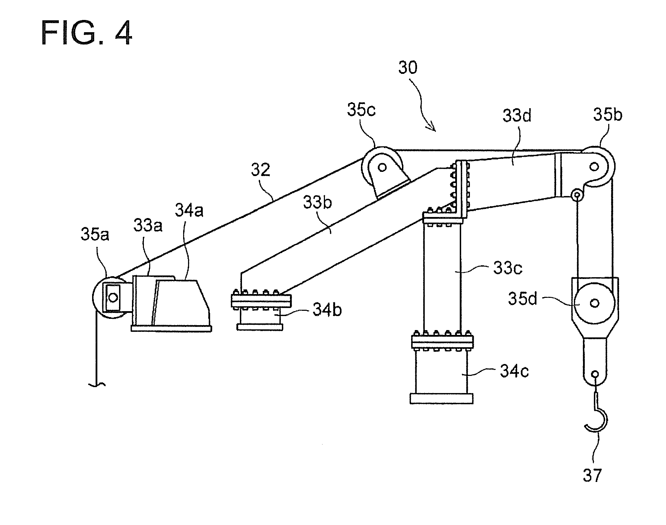

Now, referring to FIGs. 3 and 4 in addition to the above described FIGs. 1 and 2, the device lifting apparatus 30 according to the embodiment will be described. FIG. 3 is a planar view of an exemplary configuration of the device lifting apparatus according to one embodiment. FIG. 4 is a side view of the device lifting apparatus seen from the direction A of FIG. 3.

In some embodiments, the device lifting apparatus 30 includes a first reel 31 disposed in the tower interior space 19, a wire 32 for suspending the device to be installed in the nacelle interior space 24, an arm part 33 to be installed in the nacelle interior space 24, a bracket part 34 and a pulley part 35.

The exemplary configuration of each component of the device lifting apparatus 30 will be described below in detail.

As illustrated in FIG. 1, the first reel 31 is configured to wind up or down the wire 32. For instance, the first reel 31 includes a rotary drum around which the wire 32 is wound up, and a motor serving as a power source for rotating the rotary drum. This first reel 31 may be disposed anywhere in the tower interior space 19.

The wire 32 extends between the arm part 33 in the nacelle interior space 24 and the first reel 31 in the tower interior space 19 via the first opening 29.

As illustrated in FIGs. 2 to 4, the arm part 33 is configured to support the pulley part 34 on the nacelle 20. Also, the arm part 33 is divided into a plurality of sections so as to be capable of passing through the first opening 29. In FIGs. 2 to 4, for example, the arm part 33 is divided into a first arm 33a that is to be mounted to the housing 10, a second arm 33b to be mounted to the housing 10 adjacently to the first arm 33a, a third arm 33c to be mounted to the torque arm 26, and a fourth arm 33d to be connected to the second arm 33b and the third arm 33c.

The arm part 33 is mounted to the nacelle 20 via the bracket part 34. By providing the bracket part 34, it is possible to configure the arm part 33 to be attachable and detachable with respect to the nacelle 20. In FIGs. 2 to 4, for example, the bracket part 34 includes a first bracket 34a for mounting the first arm 33a to the housing 10, a second bracket 34b for mounting the second arm 33b to the housing 10, and a third bracket 34c for mounting the arm 33c to the torque arm 26. The bracket part 34 may be fixed on the main bearing 10 or the torque arm 26 by bolts, and the arm part 33 may be fixed on the bracket part 34 by bolts via flanges. Here, the fourth arm 33d may be also connected to the second arm 33b and the third arm 33c by bolts via flanges. As described above, supporting each section of the arm part 33 by at least two (three in FIGs. 3 and 4) brackets 33a to 33c enables the device lifting apparatus 30 to stand upright stably in the nacelle interior space 24. Further, the bracket part 34 is mounted to the nacelle baseplate 21 directly or indirectly (in FIG. 3, via the main bearing 10 and the torque arm 26), which enables stable transfer of a device even if the device has heavy weight. In another embodiment, the arm part 33 is directly mounted to the nacelle 20 (for instance, the nacelle baseplate 21, the torque arm 26 or the nacelle frame 22) without the bracket part 34 being interposed.

The pulley part 35 is supported on the arm part 33 and configured to guide the wire 32. In FIGs. 2 to 4, for example, the pulley part 35 includes a first pulley 35a, a second pulley 35b, and a third pulley 35c, each of which is a fixed pulley supported about an axis on the arm part 33, and a fourth pulley 35d which is a movable pulley supported by the wire 32. The first pulley 35a is disposed above the first opening 29 and configured to pull in the wire 32 into the nacelle interior space 24 from the first reel 31. The first pulley 35a may be supported about an axis on the first arm 33a. The second pulley 35b is positioned over the installation position of the device, i.e., the second opening 25, serving as a suspending point at which the device (for instance, the hydraulic motor 14) is suspended on the wire 32. The second pulley 35b may be supported about an axis on the fourth arm 33d. The third pulley 35c is disposed between the first pulley 35a and the second pulley 35b. The third pulley 35c may be supported about an axis on the second arm 33b. The fourth pulley 35d is disposed between the second pulley 35b and the hook 37 for suspending the device. With the above described pulley part 35, it is possible to prevent the wire 32 from contacting the nacelle bottom face (surrounding rim of the first opening 29 or the second opening 25) or other devices by means of the first pulley 35a and the second pulley 35b, and also to guide the wire 32 smoothly between the first pulley 35a and the second pulley 35b by means of the third pulley 35c. Furthermore, each of the second pulley (fixed pulley) 35b and the fourth pulley (movable pulley) 35d may be a double pulley which includes two pulleys arranged adjacent to each other, so that the first reel 31 with lower rated load can be employed.

According to the above described device lifting apparatus 30, the arm part 33 is mounted to the nacelle 20 to be freely attachable and detachable by means of the bracket part 34. Thus, it is possible to install the device lifting apparatus 30 in the nacelle interior space 24 when needed upon installation, maintenance, dismantlement, or the like of the wind turbine 1. Accordingly, it is also possible to have the device lifting apparatus 30 removed while the wind turbine is being operated, which enables effective use of the nacelle interior space 24. Further, the device lifting apparatus 30 includes the first reel 31 disposed in the tower interior space 19 in order to reduce the weight of the nacelle 20, the first reel 31 being provided for lifting and lowering the devices. Also, the wire 32 extends between the arm part 33 in the nacelle interior space 24 and the first reel 31 in the tower interior space 19 via the first opening 29 through which the nacelle interior space 24 communicates with the tower interior space 19. Moreover, the arm part 33 is configured capable of being divided into a plurality of sections (the first arm 33a, second arm 33b, third arm 33c, and fourth arm 33d) so as to be capable of passing through the first opening 29. As a result, it becomes possible to transfer even a long arm part 33 through the first opening 29 by dividing such an arm part 33 into a plurality of sections. Thus, it is possible to transfer each component of the device lifting apparatus 30 between the nacelle interior space 24 and the tower interior space 19 without passing the outside of the wind turbine 1, which makes it possible to install or remove the device lifting apparatus30 even in bad weather.

In one embodiment, each section of the arm part 33, the bracket part 34 and the pulley part 35 are configured capable of being transferred into the nacelle interior space 24 from the tower interior space 19 via the first opening 29 by the permanent lifting apparatus 40. As a result, it is possible to suppress the increase in weight and size of the nacelle 20.

In some embodiments, as illustrated in FIG. 3, each component of the device lifting apparatus 30 may be transferred via the first opening 29 disposed on the at least one lateral side of the main shaft 6. As a result, it is possible to prevent each component from interfering with the main shaft 6.

In one embodiment, as illustrated in FIG. 3, the first region 24a is positioned on one of the lateral sides of the main shaft 6 in the nacelle interior space 24, and the first opening 29 is disposed in the first region 24a. Also, the second region 24b is positioned on the other lateral side of the main shaft 6 in the nacelle interior space 24, and the installation position for the device subject to transfer, i.e., the second opening 25, is disposed in the second region 24b. In this case, the second arm 33b is supported on the housing 10 via the second bracket 34b, while the fourth arm 33d is connected to the second arm 33b so as to extend from the housing 10 toward the installation position of the device in the second region positioned on one lateral side of the main shaft 6 in the nacelle interior space 24. Further, the wire 32 extends from the first opening 29 in the first region 24a toward the installation position of the device along the second arm 33b and the fourth arm 33d so as to pass over the housing 10 and the main shaft 6.

With the above configuration, it is possible to install the device lifting apparatus 30 on the housing 10 of the main bearing, the housing 10 having high structural strength. Also, it is possible to have the wire 32 extend linearly from the first opening 29 toward the installation position of the device, and thus to suppress occurrence of loosening of the wire 32 and uneven distribution of the load.

Here, the arm part 33 may be fixed on the nacelle 20 immovably so as to extend in a direction orthogonal to the axial direction of the main shaft 6 between the first pulley 35a positioned over the first opening 29 in the first region 24a and the third pulley 35c positioned over the second opening 25 in the second region 24b. In another embodiment, the distal end (a portion on which a hook 37 is disposed) of the arm part 33 is configured pivotable so as to move around in the nacelle interior space 24.

Further, the arm part 33 and the pulley part 35 may be configured capable of being arranged in at least two layouts symmetric with respect to the vertical plane passing through the center axis L of the main shaft 6, so that it is possible to transfer the device both when the device is in the first region 24a and when the device is in the second region 24b. Specifically, in FIG. 3, the first arm 33a and the first pulley 35a are arranged in the first region 24a, while the second arm 33b, the third arm 33c, and the fourth arm 33d as well as the second pulley 35b, the third pulley 35c and the fourth pulley 35d are disposed in the second region 24b. Here, when transferring a device in the first region 24a after transferring a device in the second region 24b, the entire bracket part is removed and then reattached to a symmetric position (a position symmetric with respect to the vertical plane passing through the center axis L) in a region different from the region where the bracket parts have been previously disposed. That is, the first arm 33a and the first pulley 35a are to be arranged in the second region 24b, while the second arm 33b, the third arm 33c, and the fourth arm 33d as well as the second pulley 35b, the third pulley 35c and the fourth pulley 35d are to be arranged in the first region 24a. As a result, it is possible to transfer the devices disposed on both sides of the plane passing through the center axis L of the main shaft 6 one after another by using a single device lifting apparatus 30.

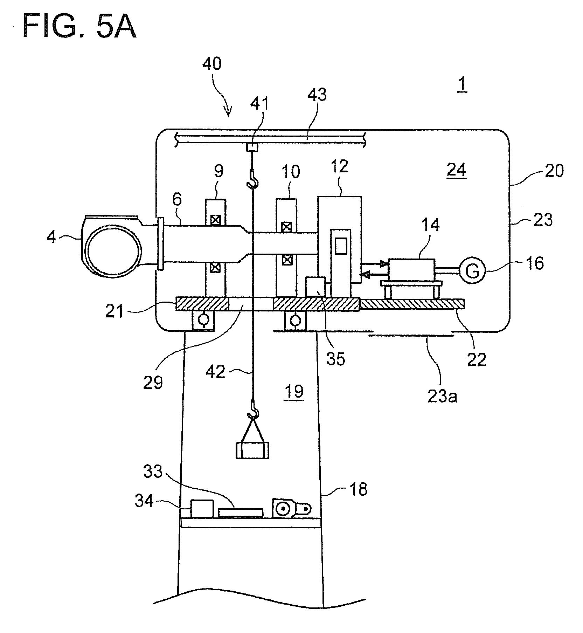

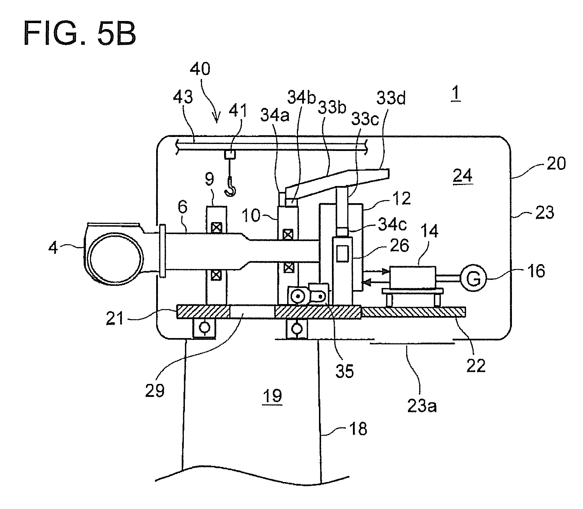

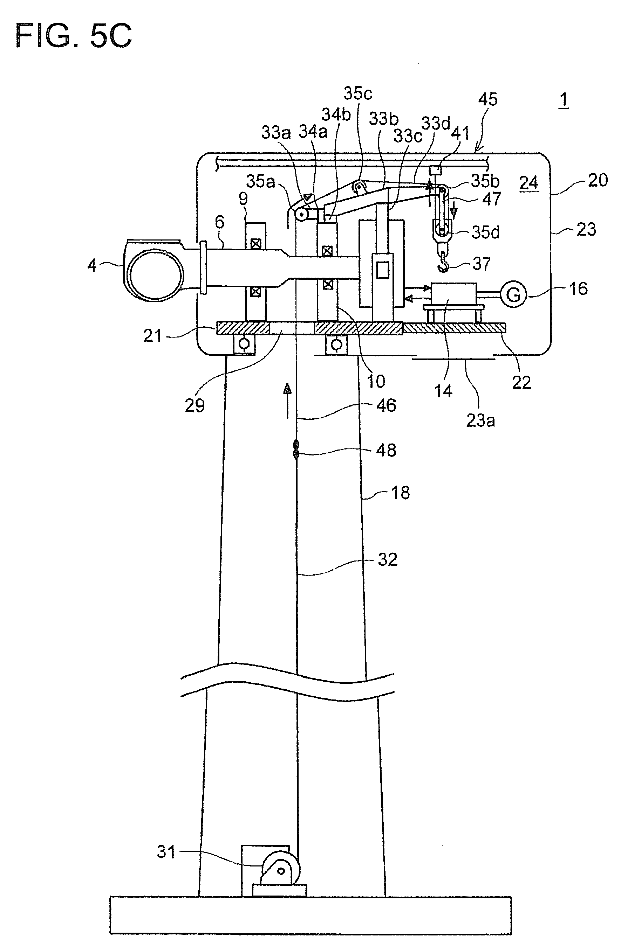

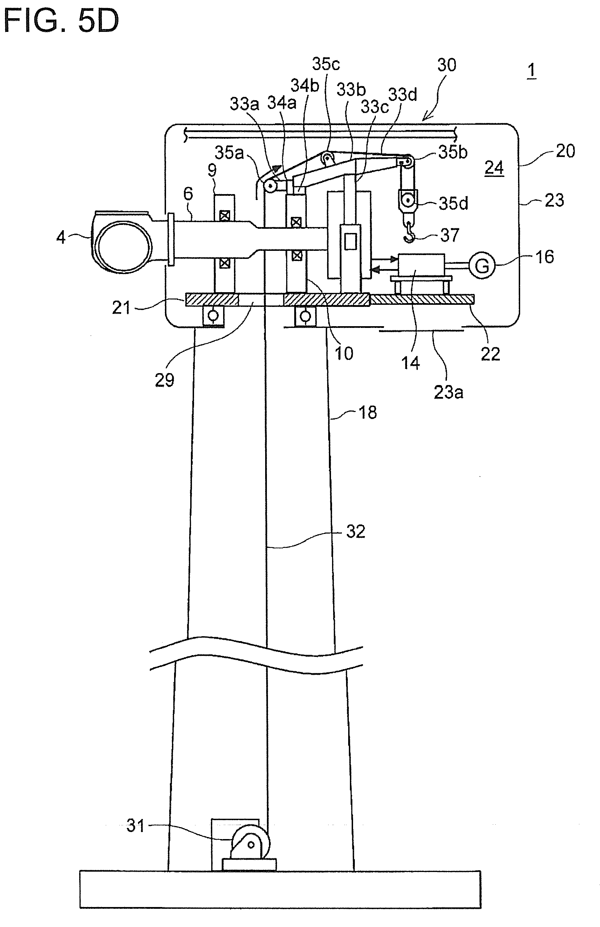

Next, in reference to FIGs. 5A to 5D, the installation method of a device lifting apparatus according to one embodiment will be described. FIG. 5A illustrates a state where each section is being transferred into a nacelle. FIG. 5B illustrates a state where each section is being assembled. FIG. 5C illustrates a state where a wire is being pulled in. FIG. 5D illustrates a state where the device lifting apparatus has been installed.

In some embodiments, as illustrated in FIG. 5A, the components each constituting the device lifting apparatus 30 are disposed in the tower interior space 19. Each component is divided into sections to such an extent that they can pass through the first opening 29. For instance, the arm part 33 is divided into the first arm 33a, the second arm 33b, the third arm 33c and the fourth arm 33d. In a transferring step, the permanent lifting apparatus 40 is used to transfer each component to the nacelle interior space 24 from the tower interior space 19 via the first opening 29. The transferred components are temporarily stored in a vacant space in the nacelle interior space 24. Subsequently, in the assembling step illustrated in FIG 5B, each component having been transferred in the transferring step is mounted to the nacelle 20. For instance, the first arm 33a is fixed on the housing 10 by bolts via the first bracket 34a, the second arm 33b is fixed on the housing 10 by bolts via the second bracket 34b, the third arm 33c is fixed on the torque arm 26 by bolts via the third bracket 34c, and the fourth arm 33d is fixed on the second arm 33b and the third arm 33c by bolts.

Next, in a wire pulling step illustrated in FIG. 5C, the wire 32 is pulled in to the arm part 33 and the pulley part 35 disposed in the nacelle interior space 24 from the first reel 31 disposed in the tower interior space 19 via the first opening 29. In the wire pulling step, a wire pulling mechanism 45 for pulling the wire 32 to the pulley part 35 from the first reel 31 when installing the device lifting apparatus 30 may be used. For instance, the wire pulling mechanism 45 includes a second reel 41 disposed in the nacelle interior space 24, an auxiliary wire 46 connected to an end of the wire 32 and wound up by the second reel 41, and a temporarily fixing member 47 for fixing the fourth pulley (movable pulley) 35d when pulling in the wire 32 by the auxiliary wire 46. The temporarily fixing member 47 fixes the fourth pulley 35d on a fixing section (for instance, the fourth arm 33d). In the exemplary embodiment illustrated in FIG. 5C, the temporarily fixing member 47 is formed by an elongated plate connecting the fourth pulley 35d and the fixing section. Although a reel in the permanent lifting apparatus 40 is used here as the second reel 41 as an example, another reel separately provided for pulling in a wire may be used. The wire pulling mechanism 45 winds up the auxiliary wire 46 to which the wire 32 is connected at a connecting part 48 by means of the second reel 41 in a state where the fourth pulley 35d is fixed by the temporarily fixing member 47. Once the end of the wire 32 reaches the fixing section (the fourth arm 33d, for instance), the end of the wire 32 is fixed to the fixing section as illustrated in FIG 5D, and then the temporarily fixing member 47 is removed. As a result, it is possible to pull the wire 32 up in a limited space easily from the first reel 31 disposed in the tower interior space 19 to the fourth pulley 35d disposed in the nacelle interior space 24.

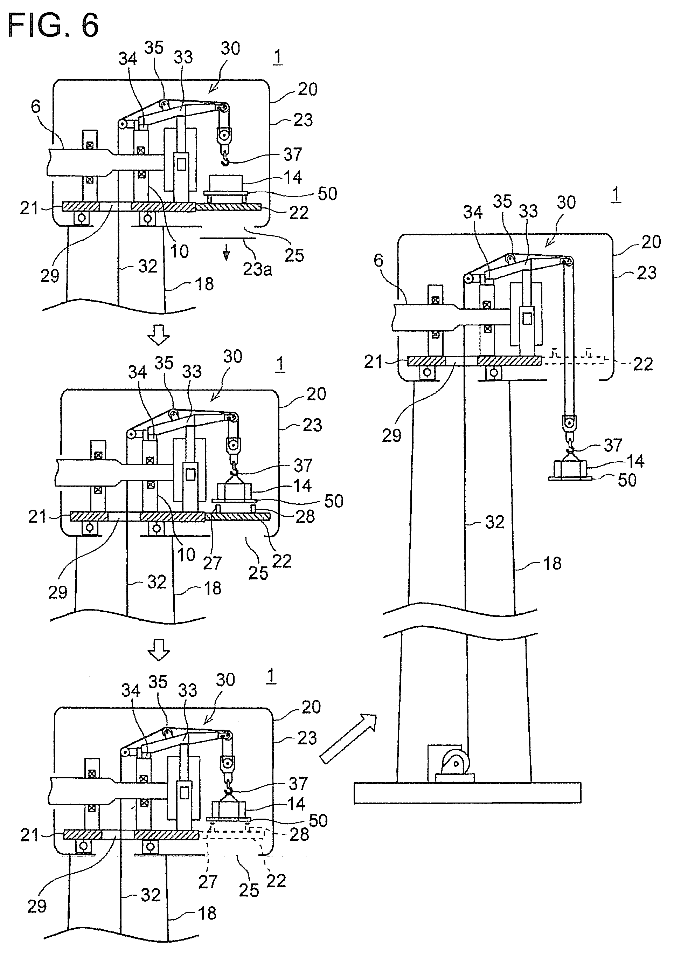

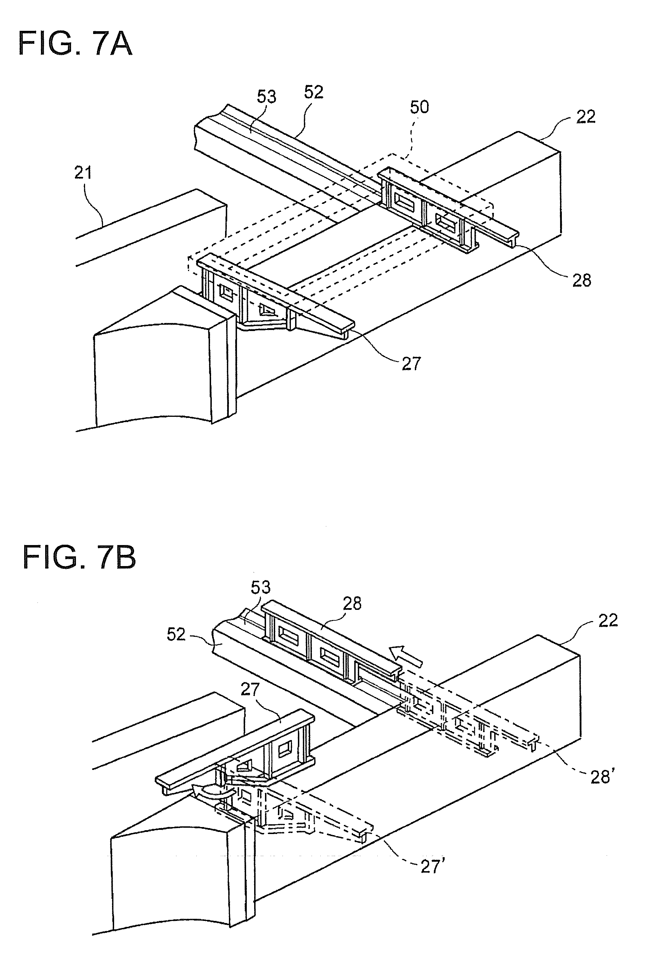

Now, a device lifting and lowering method using the device lifting apparatus 30 installed as described above will be described supplementary. FIG. 6 is a diagram for describing an example of the device lifting and lowering method using the device lifting apparatus, illustrating a case where the hydraulic motor 14 is being suspended and lowered. FIG. 7A is a perspective view of an exemplary configuration (when a device is disposed thereon) of supporting frames according to one embodiment. FIG 7B is a perspective view of an exemplary configuration (when removed) of the supporting frames according to one embodiment.

As illustrated in FIG. 6, first, the cover 23a of the nacelle cover 23 is opened, the cover being disposed under the hydraulic motor 14 intended to be transferred. Next, the hydraulic motor 14 is suspended on the hook 37 attached to the fourth pulley 35d, and then the first reel 31 is driven to lift the hydraulic motor 14. At this time, the hydraulic motor 14 may be lifted up along with the device baseplate 50 on which the hydraulic motor 14 is placed. In a state where the hydraulic motor 14 is lifted, other devices positioned between the hydraulic motor 14 and the second opening 25 under the hydraulic motor 14 are removed. For instance, the supporting frames 27, 28 for supporting the hydraulic motor 14 on the nacelle 20 side are removed.

FIGs. 7A and 7B illustrate a configuration having a pair of supporting frames 27, 28 disposed on different positions, respectively, in the axial direction of the main shaft 6. The supporting frames 27, 28 are mounted to the nacelle frame 22 to be freely rotatable or slidable and configured to support the hydraulic motor 14 (device baseplate 50) on the nacelle frame 22 side when being positioned in the first space over the second opening 25. Here, the device baseplate 50 is normally supported on the supporting frames 27, 28 in a state where the hydraulic motor 14 is placed on the device baseplate 50. Further, as illustrated in FIG. 7A, the supporting frames 27, 28 are configured to support the hydraulic motor 14 when they are positioned in the first space over the second opening 25. Each of the supporting frames 27, 28 may be provided in a cantilever fashion so that only one end is attached to the nacelle frame 22. Also, the supporting frames 27, 28 are disposed so as to be substantially perpendicular with respect to the axial direction of the main shaft 6 (i.e., in the width direction of the nacelle 20) in the horizontal plane while being positioned in the first space. Moreover, as illustrated in FIG. 7B, the supporting frames 27, 28 are configured capable of receding to the second space which is apart from the first space by moving at least in the horizontal direction from the first space. For instance, the supporting frame 27 at the front side is capable of receding from the first space to the second space by rotating. In this case, a rotational shaft for rotating the supporting frame 27 may be mounted to the nacelle frame 22. Also, the supporting frame 27 may be slid after or before the rotation of the supporting frame 27, carrying out two or more actions to recede from the first space to the second space. The supporting frame 28 at the rear side is capable of receding from the first space to the second space by sliding. For instance, in a case where another nacelle frame 52 is disposed extending in a direction substantially perpendicular to the nacelle frame 22 in the horizontal plane, a groove 53 for guiding the supporting frame 28 to slide thereon may be disposed on the nacelle frame 52. Then, in a state where the supporting frames 27, 28 have receded from the first space to the second space, the arm part 33 transfers the hydraulic motor 14 between the nacelle interior space 24 and the nacelle exterior space via the first space and the second opening. As a result, it is possible to suspend and lift or lower the hydraulic motor 14 without causing the transfer-target device such as the hydraulic motor 14 to interfere with the supporting frames 27, 28.

As described above, according to the above embodiments, it is possible to install the device lifting apparatus for a wind turbine in a nacelle interior space when needed upon construction, maintenance, dismantlement or the like of a wind turbine, which enables effective use of the nacelle interior space. Further, it is possible to transfer each component of the device lifting apparatus for a wind turbine between the nacelle interior space and a tower interior space without passing through the outside of the wind turbine, which makes it possible to install or remove the device lifting apparatus for a wind turbine even in bad weather.

Embodiments of the present invention were described in detail above, but the present invention is not limited thereto, and various amendments and modifications may be implemented within a scope that does not depart from the present invention.

## Claims

1. A device lifting apparatus for a wind turbine (1) for lifting and lowering a device disposed in a nacelle (20) mounted on an upper end of a tower (18) of the wind turbine (1), the device lifting apparatus (30) comprising:
a wire (32) for suspending the device;
a pulley part (35) including at least one pulley for guiding the wire (32);
an arm part (33) for supporting the pulley part (35), the arm (33) part being disposed in a nacelle interior space (24) to be freely attachable and detachable; and
a first reel (31) for winding the wire (32) up or down, the first reel (31) being disposed in a tower interior space (19),
**characterized in that** the arm part (33) comprises a plurality of sections each of which is capable of passing through a first opening (29) which brings the nacelle interior space (24) into communication with the tower interior space (19), and
wherein the wire (32) extends between the arm part (33) in the nacelle interior space (24) and the first reel (31) in the tower interior space (19) via the first opening (29).

2. The device lifting apparatus (30) for a wind turbine (1) according to claim 1,
wherein the first opening (29) is an opening disposed on at least one of lateral sides of a main shaft (6) of the wind turbine (1).

3. The device lifting apparatus (30) for a wind turbine (1) according to claim 1 or 2,
wherein the pulley part (35) or the plurality of sections of the arm part (33) are configured to be capable of being transferred from the tower interior space (19) to the nacelle interior space (24) via the first opening (29) by means of a lifting apparatus (40) being disposed in the nacelle interior space (24) and having smaller rated load than that of the device lifting apparatus (30).

4. The device lifting apparatus (30) for a wind turbine (1) according to any one of claims 1 to 3, further comprising at least two brackets (33a-33c) for supporting the arm part (33) on the nacelle (20)
wherein the at least two brackets (33a-33c) are attached directly or indirectly to a nacelle baseplate (21) mounted on the upper end of the tower (18).

5. The device lifting apparatus (30) for a wind turbine (1) according to claim 4,
wherein the at least two brackets (33a-33c) are attached to the nacelle baseplate (21) or a nacelle frame (22) connected to the nacelle baseplate (21), or to a housing (10) of a main bearing (7, 8) rotatably supporting the main shaft (6) of the wind turbine (1).

6. The device lifting apparatus (30) for a wind turbine (1) according to any one of claims 1 to 5,
wherein the nacelle interior space (24) includes a first region (24a) and a second region (24b) positioned on the lateral sides of the main shaft (6) of the wind turbine (1), respectively,
wherein the first opening (29) is positioned on one of the lateral sides of the main shaft (6) in the first region (24a) of the nacelle interior space (24),
wherein the arm part (33) is supported on the housing (10) of the main bearing (7, 8) supporting the main shaft (6), the arm part (33) extending from the housing (10) toward an installation position for the device in the second region (24b), and
wherein the wire (32) extends along the arm part (33) from the first opening (29) in the first region (24a) toward the installation position of the device so as to pass over the housing (10) and the main shaft (6).

7. The device lifting apparatus (30) for a wind turbine (1) according to claim 6,
wherein the arm part (33) and the pulley part (35) are configured capable of being arranged in at least two symmetric layouts with respect to a plane passing through a center axis of the main shaft (6) so that it is possible to transfer the device both when the device is in the first region (24a) and when the device is in the second region (24b).

8. The device lifting apparatus (30) for a wind turbine (1) according to claims 1 to 7,
wherein a distal end of the arm part (33) is positioned over a second opening (25) to transfer the device between the nacelle interior space (24) and a nacelle exterior space by the device lifting apparatus (30), the second opening (25) being formed on a bottom face of the nacelle (20).

9. The device lifting apparatus (30) for a wind turbine (1) according to any one of claims 1 to 8,
wherein the pulley part (35) includes: a first pulley (35a) disposed over the first opening (29) and configured to pull the wire (32) into the nacelle interior space (24) from the first reel (31), a second pulley (35b) disposed over the installation position for the device and provided as a suspending point at which the device is suspended on the wire (32), and a third pulley (35c) disposed between the first pulley (35a) and the second pulley (35b).

10. The device lifting apparatus (30) for a wind turbine (1) according to any one of claims 1 to 9,
wherein the pulley part (35) includes a fixed pulley supported about an axis on the arm part (33) and a movable pulley supported by the wire (32),
wherein the device lifting apparatus (30) further includes a wire pulling mechanism (45) for pulling in the wire (32) to the pulley part (35) disposed in the nacelle interior space (24), and
wherein the wire pulling mechanism (45) includes a second reel (41) disposed in the nacelle interior space (24), an auxiliary wire (46) connected to an end of the wire (32) and configured to be wound up by the second reel (41), and a temporarily fixing member (47) for fixing the movable pulley when pulling in the wire (32) by the auxiliary wire (46).

11. A wind turbine (1) comprising a device lifting apparatus (30) for a wind turbine (1) according to any one of claims 1 to 10,
wherein the wind turbine (1) includes a supporting frame (27) configured to support a first device when being positioned in the first space over the second opening (25) formed on the bottom face of the nacelle (20),
wherein the supporting frame (27) is configured capable of receding to a second space which is apart from the first space by moving at least in a horizontal direction from the first space, and
wherein the arm part (33) is configured capable of transferring the first device between the nacelle interior space (24) and the nacelle exterior space via the first space and the second opening while preventing interference between the supporting frame (27) and the first device in a state where the supporting frame (27) has receded to the second space.

12. An installation method of a device lifting apparatus (30) according to one of the claims 1-11 for a wind turbine (1), the
device lifting apparatus being provided for lifting and lowering a device disposed in a nacelle (20) mounted on an upper end of a tower (18) of the wind turbine (1) and including a wire (32) for suspending the device, an arm part (33) for guiding the wire (32), and a first reel (31) for winding the wire(32) up or down, the installation method comprising:
a transferring step of transferring a plurality of sections into a nacelle interior space (24) via a first opening (29) which brings a tower interior space (19) into communication with the nacelle interior space (24), each section obtained by dividing the arm part (33) so that each section is smaller than the first opening (29);
an assembling step of assembling the arm part (33) in the nacelle interior space (24) from the plurality of sections transferred in the transferring step; and
after assembling the arm part (33) in the assembling step, a wire-pulling step of pulling in the wire (32) to the arm part (33) installed in the nacelle interior space (24) from the first reel (31) disposed in the tower interior space (19) via the first opening (29).

13. The installation method of a device lifting apparatus (30) according to claim 12, wherein, in the transferring step, a lifting apparatus is used to transfer the pulley part (35) or the plurality of sections of the arm part (33) into the nacelle interior space (24) from the tower interior space (19) via the first opening (29), the lifting device being disposed in the nacelle interior space (24) and having smaller rated load than that of the device lifting apparatus.

14. The installation method of a device lifting apparatus (30) according to claim 12 or 13,
wherein the pulley part (35) includes a fixed pulley supported about an axis on the arm part (33), and a movable pulley supported by the wire (32), and
wherein the wire pulling step includes:
fixing the movable pulley by a temporarily fixing member (47);
after fixing the movable pulley, winding up an auxiliary wire (46) connected to an end of the wire (32) by a second reel disposed in the nacelle interior space (24) so that the wire (32) is pulled up to the pulley part (35), and fixing the end of the wire (32) on a nacelle side; and
after winding up the wire (32) and fixing the end of the wire (32), removing the temporarily fixing member (47) from the movable pulley.

## Patentansprüche

1. Vorrichtungshebevorrichtung für eine Windkraftanlage (1) zum Heben und Abwärtsbewegen einer Vorrichtung, die in einer Gondel (20) angeordnet ist, welche an einem oberen Ende eines Turms (18) der Windkraftanlage (1) angebracht ist, wobei die Vorrichtungshebevorrichtung (30) umfasst:
einen Draht (32) zum Aufhängen der Vorrichtung,
einen Rollenteil (35), der mindestens eine Rolle zum Führen des Drahtes (32) umfasst,
einen Armteil (33) zum Tragen des Rollenteils (35), wobei der Armteil (33) derart in einem Gondelinnenraum (24) angeordnet ist, dass er frei befestigbar und lösbar ist, und
eine erste Spule (31) zum Wickeln des Drahtes (32) nach oben oder nach unten, wobei die erste Spule (31) in einem Turminnenraum (19) angeordnet ist,
**dadurch gekennzeichnet, dass** der Armteil (33) mehrere Abschnitte umfasst, von denen jeder in der Lage ist, durch eine erste Öffnung (29) zu treten, welche den Gondelinnenraum (24) mit dem Turminnenraum (19) in Verbindung bringt, und
wobei sich der Draht (32) über die erste Öffnung (29) zwischen dem Armteil (33) in dem Gondelinnenraum (24) und der ersten Spule (31) in dem Turminnenraum (19) erstreckt.

2. Vorrichtungshebevorrichtung (30) für eine Windkraftanlage (1) nach Anspruch 1, wobei die erste Öffnung (29) eine Öffnung ist, die auf mindestens einer der seitlichen Seiten einer Hauptwelle (6) der Windkraftanlage (1) angeordnet ist.

3. Vorrichtungshebevorrichtung (30) für eine Windkraftanlage (1) nach Anspruch 1 oder 2,
wobei der Rollenteil (35) oder die mehreren Abschnitte des Armteils (33) dazu ausgebildet sind, in der Lage zu sein, mittels einer Hebevorrichtung (40), die in dem Gondelinnenraum (24) angeordnet ist und eine kleinere Nennlast als jene der Vorrichtungshebevorrichtung (30) aufweist, von dem Turminnenraum (19) über die erste Öffnung (29) zu dem Gondelinnenraum (24) überführt zu werden.

4. Vorrichtungshebevorrichtung (30) für eine Windkraftanlage (1) nach einem beliebigen der Ansprüche 1 bis 3, ferner umfassend mindestens zwei Konsolen (33a-33c) zum Tragen des Armteils (33) an der Gondel (20),
wobei die mindestens zwei Konsolen (33a-33c) direkt oder indirekt an einer Gondelgrundplatte (21) befestigt sind, die an dem oberen Ende des Turms (18) angebracht ist.

5. Vorrichtungshebevorrichtung (30) für eine Windkraftanlage (1) nach Anspruch 4,
wobei die mindestens zwei Konsolen (33a-33c) an der Gondelgrundplatte (21) oder an einem Gondelrahmen (22), der mit der Gondelgrundplatte (21) verbunden ist, oder mit einem Gehäuse (10) eines Hauptlagers (7, 8), das die Hauptwelle (6) der Windkraftanlage (1) drehbar lagert, befestigt sind.

6. Vorrichtungshebevorrichtung (30) für eine Windkraftanlage (1) nach einem beliebigen der Ansprüche 1 bis 5,
wobei der Gondelinnenraum (24) einen ersten Bereich (24a) und einen zweiten Bereich (24b) umfasst, die jeweils auf den seitlichen Seiten der Hauptwelle (6) der Windkraftanlage (1) angeordnet sind,
wobei die erste Öffnung (29) auf einer der seitlichen Seiten der Hauptwelle (6) in dem ersten Bereich (24a) des Gondelinnenraums (24) angeordnet ist,
wobei der Armteil (33) an dem Gehäuse (10) des Hauptlagers (7, 8), welches die Hauptwelle (6) lagert, getragen wird, wobei sich der Armteil (33) von dem Gehäuse (10) in Richtung einer Montageposition für die Vorrichtung in dem zweiten Bereich (24b) erstreckt, und
wobei sich der Draht (32) entlang dem Armteil (33) von der ersten Öffnung (29) in dem ersten Bereich (24a) in Richtung der Montageposition der Vorrichtung derart erstreckt, dass er über das Gehäuse (10) und die Hauptwelle (6) verläuft.

7. Vorrichtungshebevorrichtung (30) für eine Windkraftanlage (1) nach Anspruch 6
wobei der Armteil (33) und der Rollenteil (35) dazu ausgebildet sind, in mindestens zwei symmetrischen Anordnungen in Bezug auf eine Ebene, die durch eine Mittelachse der Hauptwelle (6) verläuft, angeordnet werden zu können, so dass es möglich ist, die Vorrichtung zu überführen, sowohl wenn die Vorrichtung in dem ersten Bereich (24a) ist, als auch wenn die Vorrichtung in dem zweiten Bereich (24b) ist.

8. Vorrichtungshebevorrichtung (30) für eine Windkraftanlage (1) nach Anspruch 1 bis 7,
wobei ein distales Ende des Armteils (33) über einer zweiten Öffnung (25) angeordnet ist, um die Vorrichtung mittels der Vorrichtungshebevorrichtung (30) zwischen dem Gondelinnenraum (24) und einem Gondelaußenraum zu überführen, wobei die zweite Öffnung (25) an einer unteren Fläche der Gondel (20) ausgebildet ist.

9. Vorrichtungshebevorrichtung (30) für eine Windkraftanlage (1) nach einem beliebigen der Ansprüche 1 bis 8,
wobei der Rollenteil (35) umfasst: eine erste Rolle (35a), die über der ersten Öffnung (29) angeordnet und dazu ausgebildet ist, den Draht (32) von der ersten Spule (31) in den Gondelinnenraum (24) zu ziehen, eine zweite Rolle (35b), die über der Montageposition für die Vorrichtung angeordnet ist und als Aufhängungspunkt vorgesehen ist, an dem die Vorrichtung an dem Draht (32) aufgehängt ist, und eine dritte Rolle (35c), die zwischen der ersten Rolle (35a) und der zweiten Rolle (35b) angeordnet ist.

10. Vorrichtungshebevorrichtung (30) für eine Windkraftanlage (1) nach einem beliebigen der Ansprüche 1 bis 9,
wobei der Rollenteil (35) eine feststehende Rolle, die an dem Armteil (33) um eine Achse getragen wird, und eine bewegliche Rolle, die durch den Draht (32) getragen wird, umfasst,
wobei die Vorrichtungshebevorrichtung (30) ferner einen Drahtzugmechanismus (45) zum Einziehen des Drahtes (32) zu dem Rollenteil (35), der in dem Gondelinnenraum (24) angeordnet ist, umfasst, und
wobei der Drahtzugmechanismus (45) eine zweite Spule (41), die in dem Gondelinnenraum (24) angeordnet ist, einen Hilfsdraht (46), der mit einem Ende des Drahtes (32) verbunden und dazu ausgebildet ist, durch die zweite Spule (41) aufgewickelt zu werden, und ein Temporärbefestigungsglied (47) zum Befestigen der beweglichen Rolle beim Einziehen des Drahtes (32) durch den Hilfsdraht (46) umfasst.

11. Windkraftanlage (1), umfassend eine Vorrichtungshebevorrichtung (30) für eine Windkraftanlage (1) nach einem beliebigen der Ansprüche 1 bis 10,
wobei die Windkraftanlage (1) einen Tragrahmen (27) umfasst, der dazu ausgebildet ist, eine erste Vorrichtung zu tragen, wenn sie in dem ersten Raum über der zweiten Öffnung (25), die an der unteren Fläche der Gondel (20) ausgebildet ist, angeordnet wird,
wobei der Tragrahmen (27) dazu ausgebildet ist, in der Lage zu sein, durch Bewegen mindestens in einer waagrechten Richtung von dem ersten Raum zu einem zweiten Raum zurückzutreten, der von dem ersten Raum getrennt ist, und
wobei der Armteil (33) dazu ausgebildet ist, in der Lage zu sein, die erste Vorrichtung über den ersten Raum und die zweite Öffnung zwischen dem Gondelinnenraum (24) und dem Gondelaußenraum zu überführen, wobei eine Beeinträchtigung zwischen dem Tragrahmen (27) und der ersten Vorrichtung in einem Zustand, in dem der Tragrahmen (27) zu dem zweiten Raum zurückgetreten ist, verhindert wird.

12. Anbringungsverfahren für eine Vorrichtungshebevorrichtung (30) nach einem der Ansprüche 1-11 für eine Windkraftanlage (1), wobei die Vorrichtungshebevorrichtung zum Heben und Abwärtsbewegen einer Vorrichtung vorgesehen ist, die in einer Gondel (20) angeordnet ist, welche an einem oberen Ende eines Turms (18) der Windkraftanlage (1) angebracht ist, und einen Draht (32) zum Aufhängen der Vorrichtung, einen Armteil (33) zum Führen des Drahtes (32) und eine erste Spule (31) zum Wickeln des Drahtes (32) nach oben oder nach unten umfasst, wobei das Anbringungsverfahren umfasst:
einen Überführungsschritt des Überführens mehrerer Abschnitte in einen Gondelinnenraum (24) über eine erste Öffnung (29), welche einen Turminnenraum (19) mit dem Gondelinnenraum (24) in Verbindung bringt, wobei jeder Abschnitt durch Teilen des Armteils (33) derart, dass jeder Abschnitt kleiner als die erste Öffnung (29) ist, erhalten wird,
einen Zusammenbauschritt des Zusammenbauens des Armteils (33) in dem Gondelinnenraum (24) aus den mehreren Abschnitten, die in dem Überführungsschritt überführt wurden, und
nach dem Zusammenbauen des Armteils (33) in dem Zusammenbauschritt, einen Drahtziehschritt des Einziehens des Drahtes (32) zu dem Armteil (33), der in dem Gondelinnenraum (24) angebracht ist, von der ersten Spule (31), die in dem Turminnenraum (19) angeordnet ist, über die erste Öffnung (29).

13. Anbringungsverfahren einer Vorrichtungshebevorrichtung (30) nach Anspruch 12,
wobei in dem Überführungsschritt eine Hebevorrichtung verwendet wird, um den Rollenteil (35) oder die mehreren Abschnitte des Armteils (33) von dem Turminnenteil (19) über die erste Öffnung (29) in den Gondelinnenteil (24) zu überführen, wobei die Hebevorrichtung in dem Gondelinnenraum (24) angeordnet ist und eine kleinere Nennlast als jene der Vorrichtungshebevorrichtung aufweist.

14. Anbringungsverfahren einer Vorrichtungshebevorrichtung (30) nach Anspruch 12 oder 13,
wobei der Rollenteil (35) eine feststehende Rolle umfasst, die an dem Armteil (33) um eine Achse getragen wird, und eine bewegliche Rolle, die durch den Draht (32) getragen wird, und
wobei der Drahtziehschritt umfasst:
Befestigen der beweglichen Rolle durch ein Temporärbefestigungsglied (47),
nach dem Befestigen der beweglichen Rolle, Aufwickeln eines Hilfsdrahtes (46), der mit einem Ende des Drahtes (32) verbunden ist, durch eine zweite Spule, die in dem Gondelinnenraum (24) angeordnet ist, derart, dass der Draht (32) zu dem Rollenteil (35) hochgezogen wird, und Befestigen des Endes des Drahtes (32) auf einer Gondelseite, und
nach dem Aufwickeln des Drahtes (32) und Befestigen des Endes des Drahtes (32), Entfernen des temporären Befestigungsglieds (47) von der beweglichen Rolle.

## Revendications

1. Appareil de levage de dispositif pour une éolienne (1) destiné à soulever et abaisser un dispositif disposé dans une nacelle (20) montée sur une extrémité supérieure d'une tour (18) de l'éolienne (1), l'appareil de levage de dispositif (30) comportant :
un câble (32) destiné à suspendre le dispositif ;
une partie de poulie (35) comprenant au moins une poulie destinée à guider le câble (32) ;
une partie de bras (33) destinée à supporter la partie de poulie (35), la partie de bras (33) étant disposée dans un espace intérieur de nacelle (24) pour être librement fixée et démontée ; et
un premier tambour (31) destiné à enrouler ou dérouler le câble (32), le premier tambour (31) étant disposé dans un espace intérieur de tour (19),
**caractérisé en ce que** la partie de bras (33) comporte une pluralité des sections dont chacune est capable de passer à travers une première ouverture (29) qui amène l'espace intérieur de nacelle (24) en communication avec l'espace intérieur de tour (19), et
dans lequel le câble (32) s'étend entre la partie de bras (33) dans l'espace intérieur de nacelle (24) et le premier tambour (31) dans l'espace intérieur de tour (19) en passant par la première ouverture (29).

2. Appareil de levage de dispositif (30) pour une éolienne (1) selon la revendication 1,
dans lequel la première ouverture (29) est une ouverture disposée sur au moins un des côtés latéraux d'un arbre principal (6) de l'éolienne (1).

3. Appareil de levage de dispositif (30) pour une éolienne (1) selon la revendication 1 ou 2,
dans lequel la partie de poulie (35) ou la pluralité de sections de la partie de bras (33) sont configurées pour être capable d'être transférées depuis l'espace intérieur de tour (19) jusqu'à l'espace intérieur de nacelle (24) en passant par la première ouverture (29) au moyen d'un appareil de levage (40) qui est disposé dans l'espace intérieur de nacelle (24) et ayant une charge nominale plus petite que celle de l'appareil de levage de dispositif (30).

4. Appareil de levage de dispositif (30) pour une éolienne (1) selon l'une quelconque des revendications 1 à 3, comportant en outre au moins deux supports (33a à 33c) destinés à supporter la partie de bras (33) sur la nacelle (20),
dans lequel les au moins deux supports (33a à 33c) sont fixés directement ou indirectement sur une plaque de base de nacelle (21) montée sur l'extrémité supérieure de la tour (18).

5. Appareil de levage de dispositif (30) pour une éolienne (1) selon la revendication 4,
dans lequel les au moins deux supports (33a à 33c) sont fixés sur la plaque de base de nacelle (21) ou un bâti de nacelle (22) relié à la plaque de base de nacelle (21), ou sur un boîtier (10) d'un palier principal (7, 8) supportant de façon rotative l'arbre principal (6) de l'éolienne (1).

6. Appareil de levage de dispositif (30) pour une éolienne (1) selon l'une quelconque des revendications 1 à 5,
dans lequel l'espace intérieur de nacelle (24) comprend une première zone (24a) et une deuxième zone (24b) positionnées sur des côtés latéraux de l'arbre principal (6) de l'éolienne (1), respectivement,
dans lequel la première ouverture (29) est positionnée sur un des côtés latéraux de l'arbre principal (6) dans la première zone (24a) de l'espace intérieur de nacelle (24),
dans lequel la partie de bras (33) est supportée sur le boîtier (10) du palier principal (7, 8) supportant l'arbre principal (6), la partie de bras (33) s'étendant depuis le boîtier (10) vers une position d'installation pour le dispositif dans la deuxième zone (24b), et
dans lequel le câble (32) s'étend le long de la partie de bras (33) depuis la première ouverture (29) dans la première zone (24a) vers la position d'installation du dispositif de façon à passer au-dessus du boîtier (10) et de l'arbre principal (6).

7. Appareil de levage de dispositif (30) pour une éolienne (1) selon la revendication 6,
dans lequel la partie de bras (33) et la partie de poulie (35) sont configurées en pouvant être disposées dans au moins deux agencements symétriques par rapport à un plan passant par un axe central de l'arbre principal (6) de telle sorte qu'il est possible de transférer le dispositif quand le dispositif est dans la première zone (24a) et quand le dispositif est dans la deuxième zone (24b).

8. Appareil de levage de dispositif (30) pour une éolienne (1) selon les revendications 1 à 7,
dans lequel une extrémité distale de la partie de bras (33) est positionnée au-dessus d'une deuxième ouverture (25) pour transférer le dispositif entre l'espace intérieur de nacelle (24) et un espace extérieur de nacelle grâce à l'appareil de levage de dispositif (30), la deuxième ouverture (25) étant formée sur une face inférieure de la nacelle (20).

9. Appareil de levage de dispositif (30) pour une éolienne (1) selon l'une quelconque des revendications 1 à 8,
dans lequel la partie de poulie (35) comprend :
une première poulie (35a) disposée au-dessus de la première ouverture (29) et configurée pour tirer le câble (32) dans l'espace intérieur de nacelle (24) à partir du premier tambour (31), une deuxième poulie (35b) disposée au-dessus de la position d'installation pour le dispositif et prévue comme point de suspension auquel le dispositif est suspendu sur le câble (32), et une troisième poulie (35c) disposée entre la première poulie (35a) et la deuxième poulie (35b).

10. Appareil de levage de dispositif (30) pour une éolienne (1) selon l'une quelconque des revendications 1 à 9,
dans lequel la partie de poulie (35) comprend une poulie fixe supportée autour d'un axe sur la partie de bras (33) et une poulie mobile supportée par le câble (32),
dans lequel l'appareil de levage de dispositif (30) comprend en outre un mécanisme de traction de câble (45) destiné à tirer le câble (32) jusqu'à la partie de poulie (35) disposée dans l'espace intérieur de nacelle (24), et
dans lequel le mécanisme de traction de câble (45) comprend un deuxième tambour (41) disposé dans l'espace intérieur de nacelle (24), un câble auxiliaire (46) relié à une extrémité du câble (32) et configuré pour être enroulé par le deuxième tambour (41), et un élément de fixation temporaire (47) destiné à fixer la poulie mobile lors de la traction du câble (32) par le câble auxiliaire (46).

11. Eolienne (1) comportant un appareil de levage de dispositif (30) pour une éolienne (1) selon l'une quelconque des revendications 1 à 10,
dans laquelle l'éolienne (1) comprend un bâti de support (27) configuré pour supporter un premier dispositif quand il est positionné dans le premier espace au-dessus de la deuxième ouverture (25) formée sur la face inférieure de la nacelle (20),
dans lequel le bâti de support (27) est configuré en étant capable de reculer vers un deuxième espace qui est espacé du premier espace en se déplaçant au moins dans une direction horizontale depuis le premier espace, et
dans lequel la partie de bras (33) est configurée en étant capable de transférer le premier dispositif entre l'espace intérieur de nacelle (24) et l'espace extérieur de nacelle en passant par le premier espace et la deuxième ouverture tout en empêchant une interférence entre le bâti de support (27) et le premier dispositif dans un état où le bâti de support (27) a reculé vers le deuxième espace.

12. Procédé d'installation d'un appareil de levage de dispositif (30) selon l'une des revendications 1 à 11 pour une éolienne (1), l'appareil de levage de dispositif étant prévu pour soulever et abaisser un dispositif disposé dans une nacelle (20) montée sur une extrémité supérieure d'une tour (18) de l'éolienne (1) et comprenant un câble (32) destiné à suspendre le dispositif, une partie de bras (33) destinée à guider le câble (32), et un premier tambour (31) destiné enrouler ou dérouler le câble (32), le procédé d'installation comportant :
une étape de transfert destinée à transférer une pluralité de sections dans l'espace intérieur de nacelle (24) en passant par une première ouverture (29) qui amène un espace intérieur de tour (19) en communication avec l'espace intérieur de nacelle (24), chaque section étant obtenue en divisant la partie de bras (33) de telle sorte que chaque section est plus petite que la première ouverture (29) ;
une étape d'assemblage destinée à assembler la partie de bras (33) dans l'espace intérieur de nacelle (24) de la pluralité de sections transférées dans l'étape de transfert ; et
après avoir assemblé la partie de bras (33) dans l'étape d'assemblage, une étape de traction de câble destinée à tirer le câble (32) jusqu'à la partie de bras (33) installée dans l'espace intérieur de nacelle (24) à partir du premier tambour (31) disposé dans l'espace intérieur de tour (19) en passant par la première ouverture (29).

13. Procédé d'installation d'appareil de levage de dispositif (30) selon la revendication 12,
selon lequel, dans l'étape de transfert, un appareil de levage est utilisé pour transférer la partie de poulie (35) ou la pluralité de sections de la partie de bras (33) dans l'espace intérieur de nacelle (24) à partir de l'espace intérieur de tour (19) en passant par la première ouverture (29), le dispositif de levage étant disposé dans l'espace intérieur de nacelle (24) et ayant une charge nominale plus petite que celle de l'appareil de levage de dispositif.

14. Procédé d'installation d'appareil de levage de dispositif (30) selon la revendication 12 ou 13, où la partie de poulie (35) comprend une poulie fixe supportée autour d'un axe sur la partie de bras (33), et une poulie mobile supportée par le câble (32), et
selon lequel l'étape de traction de câble comprend le fait de :
fixer la poulie mobile grâce à un élément de fixation temporaire (47) ;
après fixation de la poulie mobile, enrouler un câble auxiliaire (46) relié à une extrémité du câble (32) grâce à un deuxième tambour disposé dans l'espace intérieur de nacelle (24) de telle sorte que le câble (32) est tiré vers le haut jusqu'à la partie de poulie (35), et fixer l'extrémité du câble (32) sur un côté de nacelle ; et
après enroulement du câble (32) et fixation de l'extrémité du câble (32), enlever l'élément de fixation temporaire (47) de la poulie mobile.
